# EUROPÄISCHE PATENTANMELDUNG

(11) **EP 1 662 189 A2**
(43) Veröffentlichungstag der Anmeldung: **31.05.2006**
(21) Anmeldenummer: 05111231.6
(22) Anmeldetag: 24.11.2005
(51) Int. Cl.: F16L 1/00

(54) **Verfahren zur Verlegung einer gasisolierten elektrischen Leitung**

(30) Priorität: 26.11.2004 DE 102004058030
(71) Anmelder: SIEMENS AKTIENGESELLSCHAFT, 80333 München (DE)
(72) Erfinder: Koch, Hermann, 91466, Gerhardshofen (DE)

(57) **Zusammenfassung**

Zur Verlegung einer gasisolierten elektrischen Leitung in einem Gewässer werden zunächst Teilstücke zu einer Transporteinheit zusammengestellt. Die Transporteinheit wird in eine Verlegezone auf dem Gewässer transportiert. In der Verlegezone werden mehrere Transporteinheiten miteinander verbunden und in das Gewässer abgesenkt. Somit ist eine effektive Montage und schnelle Verlegung von langen gasisolierten elektrischen Leitungen in einem Gewässer ermöglicht.

## Beschreibung

Verfahren zur Verlegung einer gasisolierten elektrischen Leitung

Die Erfindung bezieht sich auf ein Verfahren zur Verlegung einer gasisolierten elektrischen Leitung in einem Gewässer, wobei die gasisolierte elektrische Leitung zumindest einen innerhalb eines Kapselungsgehäuses elektrisch isoliert gehaltenen elektrischen Leiter aufweist.

Gasisolierte elektrische Leitungen werden eingesetzt, um große Energiemengen in einem Elektroenergienetz zu übertragen. Bisher erfolgte die Verlegung derartiger gasisolierter elektrischer Leitungen vor allem ober- oder unterirdisch. Mit dem Entstehen von Off-Shore-Windenergie-Anlagen stellt sich das Problem, die dort erzeugte elektrische Energie in Elektroenergieversorgungsnetze einzuspeisen. Zum Anschluss der Off-Shore-Windenergie-Anlagen sind dazu beispielsweise gasisolierte elektrische Leitungen verwendbar. Diese sind über weite Strecken auch innerhalb eines Gewässers zu verlegen.

Der Erfindung liegt die Aufgabe zugrunde, ein Verfahren anzugeben, welches eine rationelle schnelle Verlegung von gasisolierten elektrischen Leitern in einem Gewässer ermöglicht.

Erfindungsgemäß wird die Aufgabe bei einem Verfahren der eingangs genannten Art dadurch gelöst, dass mehrere Teilstücke der gasisolierten elektrischen Leitung zu einer Transporteinheit zusammengestellt werden, die Transporteinheit in eine Verlegezone auf dem Gewässer transportiert wird, mehrere Transporteinheiten in der Verlegezone miteinander verbunden werden und in das Gewässer abgesenkt werden.

Durch eine Unterteilung des Verlegeprozesses in die Zusammenstellung von Transporteinheiten, die Verbringung der Transporteinheiten in eine Verlegezone sowie das Verbinden der Transporteinheiten und das Absenken in das Gewässer sind die einzelnen Arbeitsvorgänge unabhängig voneinander durchführbar. Die Zusammenstellung zu Transporteinheiten vor ihrer Verbringung in die Verlegezone gestattet eine rationelle Versorgung der Verlegezone mit notwendigen Teilstücken. Eine Transporteinheit kann beispielsweise ein Kapselungsgehäuse mit darin isoliert angeordnetem elektrischen Leiter sein. Bei einem Vorsehen entsprechender Pufferkapazitäten kann so unabhängig von dem Voranschreiten der einen oder der anderen Verlegetätigkeit jede der Aufgaben wie das Zusammenstellen der Transporteinheiten, der Transport der Transporteinheiten, das Verbinden der Transporteinheiten sowie das Absenken unabhängig voneinander erfolgen. Weiterhin ist es durch die Aufteilung möglich, bereits Teilstücke der gasisolierten elektrischen Leitung an Land zu montieren.

Eine vorteilhafte Ausgestaltung kann vorsehen, dass die Transporteinheiten vor ihrer Verbringung in die Verlegezone einer Hochspannungsprüfung unterzogen werden.

Hochspannungsprüfungen benötigen oftmals aufwendige Prüfvorrichtungen welche aufwendig zu transportieren sind. Die Hochspannungsprüfung verhindert die Auslieferung von fehlerhaften Teilen in die Verlegebereiche. Die Verlagerung der Hochspannungsprüfung von dem Verlegebereich in einen Vormontageabschnitt, der sich beispielsweise an Land befinden kann, gestattet es, in der Verlegezone ein rasches Verlegen und Zusammenstellen der gasiolierten elektrischen Leitung vorzunehmen. Fehlerhafte Teile werden bereits vor ihrem Transport identifiziert und können nachgebessert werden.

Vorteilhafterweise kann weiterhin vorgesehen sein, dass zur Herstellung einer Transporteinheit mehrere rohrförmige Kapselungsgehäuse miteinander verbunden werden.

Neben der Ausgestaltung einer Transporteinheit als rohrförmiges Kapselungsgehäuse, mit elektrischem Leiter und entsprechenden Stützisolatoren kann eine Transporteinheit auch aus mehreren rohrförmigen Kapselungsgehäusen gebildet sein, die miteinander verbunden sind. Je größer die Transporteinheit gewählt wird, desto kostengünstiger kann der Transport in die Verlegezone erfolgen.

Vorteilhaft kann dabei vorgesehen sein, dass die mehreren Kapselungsgehäuse stirnseitig miteinander verbunden sind.

Die rohrförmigen Kapselungsgehäuse können beispielsweise stirnseitig miteinander gasdicht verbunden werden. Durch diese Anordnung entsteht eine lang gestreckte hohlzylindrische Transporteinheit. Bei einer entsprechenden Auswahl der Materialien kann so eine vergleichsweise elastische lang gestreckte Transporteinheit entstehen, welche in die Verlegezone transportierbar ist. Eine derartige Transporteinheit kann beispielsweise eine Länge von einigen 100 Metern oder gar einigen Kilometern Länge aufweisen. Die stirnseitige Verbindung kann derart erfolgen, dass die Kapselungsgehäuse gasdicht miteinander verbunden werden. Durch diese Ausgestaltung der Transporteinheiten wird die Anzahl der in der Verlegezone zu fertigenden Verbindungsstellen reduziert.

Alternativ oder zusätzlich kann jedoch auch vorgesehen werden, dass mehrere Kapselungsgehäuse bündelförmig miteinander verbunden sind.

Die Bündelung von rohrförmigen Kapselungsgehäusen ermöglicht die Ausgestaltung stabiler Transporteinheiten. Bei einer Bündelung von stirnseitig miteinander verbundenen Kapselungsgehäusen kann so die Stabilität der Transporteinheiten erhöht werden. Es ist jedoch auch die Bündelung von einzelnen Kapselungsgehäusen zu Transporteinheiten möglich.

Vorteilhafterweise kann weiterhin vorgesehen sein, dass die im Innern der mehreren Kapselungsgehäuse befindlichen elektrischen Leiter zur Herstellung einer Transporteinheit miteinander elektrisch kontaktiert werden.

Die Verbindung der elektrischen Leiter gestattet es, die Transporteinheiten möglichst lang auszugestalten und diese langen Abschnitte einmalig einer Hochspannungsprüfung zu unterziehen. Dadurch wird der im Zuge des Verlegevorganges notwendige Aufwand für Hochspannungsprüfungen reduziert. Dies ermöglicht Zeiteinsparungen. Die elektrische Kontaktierung kann dabei derart geschehen, dass die elektrische Kontaktierung der endgültigen Kontaktierung nach Abschluss der Verlegearbeiten entspricht.

Eine weitere vorteilhafte Ausgestaltung kann vorsehen, dass die Kapselungsgehäuse der Transporteinheiten mit einem Gas befüllt und gasdicht verschlossen sind.

Ein gasdichter Verschluss erfolgt beispielsweise mittels Verschrauben oder Verschweißen oder Verkleben der Öffnungen an den Kapselungsgehäusen. Das im Inneren der Kapselungsgehäuse befindliche Gas kann beispielsweise ein Stickstoffgemisch, beispielsweise atmosphärische Luft, oder auch ein elektronegatives Gas wie Schwefelhexafluorid sein. Durch das Verschließen und Befüllen mit einem Gas kann das Eindringen von Wasser verhindert werden. Vorteilhaft ist dabei eine Befüllung des Kapselungsgehäuses mit einem Überdruck im Inneren. Bei der Auswahl des entsprechenden Gases, beispielsweise einem besonders getrockneten oder behandelten Gas, sind auch die im Innern des Kapselungsgehäuses befindlichen Teilstücke, wie Isolatoren oder elektrische Leiter, vor einem Verschmutzen bzw. Korrodieren geschützt.

Eine weitere vorteilhafte Ausgestaltung kann vorsehen, dass die Transporteinheiten schwimmend in die Verlegezone transportiert werden, wobei die Kapselungsgehäuse als Schwimmkörper wirken.

Die Nutzung der Transporteinheiten als Schwimmkörper gestattet es, besonders kostengünstig die Transporteinheiten besonders kostengünstig in die Verlegezone zu schleppen. Da die gasisolierte elektrische Leitung für die Verlegung in einem Gewässer konstruiert ist, kann ein schwimmender Transport dem Kapselungsgehäuse keinen Schaden zufügen. Ein derartiger Transport der Transporteinheiten gestattet eine besonders effektive Zusammenstellung der Transporteinheiten. So kann es beispielsweise vorgesehen sein, dass an einem Uferabschnitt die Transporteinheiten aus mehreren Teilstücken, wie beispielsweise einem rohrförmigen Kapselungsgehäuse, einem elektrischen Leiter und Isolierkörpern zum Halten des elektrischen Leiters im Innern des Kapselungsgehäuses zu einem Abschnitt der gasisolierten Leitung zusammengefügt werden. Diese aus mehreren Teilstücken gebildeten Transporteinheiten können nunmehr unmittelbar nach ihrer Zusammenstellung in das Gewässer verbracht werden und von dort schwimmend in die Verlegezone transportiert werden. Dabei kann es vorgesehen sein, dass mehrere Kapselungsgehäuse beispielsweise stirnseitig miteinander verbunden werden. So entsteht eine große Transporteinheit, die leicht in die Verlegezone schleppbar ist. Große Transporteinheiten können auch durch eine Bündelung von Kapselungsgehäusen zusammengestellt werden.

Weiterhin kann vorteilhaft vorgesehen sein, dass die Verbindung der Transporteinheiten in der Verlegezone auf einer längs eines Verlegeweges verschiebbaren Plattform erfolgt.

Eine längs des Verlegeweges verschiebbare Plattform gestattet es, insbesondere bei der Verwendung von sehr langen Transporteinheiten, diese beispielsweise aus dem Wasser aufzunehmen und über die verschiebbare Plattform hinweg gleiten zu lassen. Durch diese Art der Verlegung werden Anfänge und Enden der Transporteinheit zwangsweise über die Plattform geführt. So ist es leicht möglich, mehrere der Transporteinheiten miteinander zu verbinden. Weiterhin gestattet das Hinüberführen der Transporteinheiten über die Plattform eine Kontrolle der Transporteinheiten. Insbesondere während eines Transportes ggf. auftretende Beschädigungen können so erkannt werden. Nach einem Verbinden der einzelnen Transporteinheiten zu der endgültig zu verlegenden gasisolierten elektrischen Leitung ist diese von der Plattform absenkbar. Vorteilhaft kann dazu vorgesehen sein, dass die in die Verlegezone verbrachten Transporteinheiten im Gewässer schwimmend auf die Plattform bewegt werden, dort miteinander verbunden werden und die gasisolierte Leitung in das Gewässer abgesenkt wird.

Im Folgenden wird ein Ausführungsbeispiel der Erfindung schematisch in Figuren gezeigt und nachfolgend näher beschrieben.

Dabei zeigt die
- Figur 1: eine Montage einzelner Teilstücke zu einer Transporteinheit, die
- Figur 2: eine längs des Verlegeweges einer gasisolierten Leitung verschiebbare Plattform und die
- Figur 3: eine Darstellung des Transportes von einer Transporteinheit.

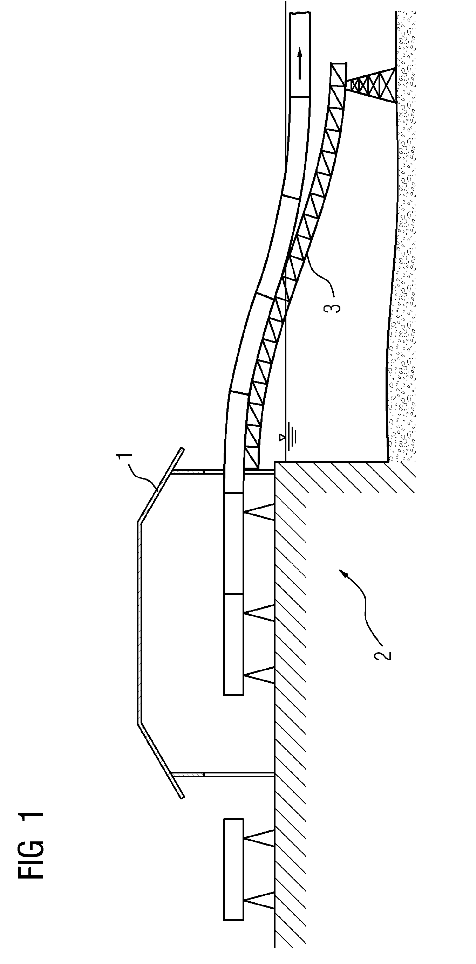

Eine Montageräumlichkeit beispielsweise ein Zelt, ein Container oder auch ein festes Gebäude (1) sind in dem in der Figur 1 gezeigten Ausführungsbeispiel an einem Küstenabschnitt 2 errichtet. Es kann jedoch auch vorgesehen sein, dass statt der Nutzung eines Gebäudes 1 an einem Küstenabschnitt die Montageräumlichkeit auf einem Schiff oder einer künstlichen Inselanlage errichtet ist. In dem Gebäude 1 ist eine Montagestelle angeordnet, welche der Montage von Kapselungsgehäusen einer gasisolierten elektrischen Leitung dienen. Die Kapselungsgehäuse werden angeliefert und in das Gebäude 1 verbracht. Dort werden die Kapselungsgehäuse mit Stützisolatoren, elektrischen Leitern, Schottisolatoren usw. ausgestattet und zu Abschnitten einer gasisolierten elektrischen Leitung zusammengefügt. Es kann jedoch auch vorgesehen sein, dass die Kapselungsgehäuse komplett mit elektrischen Leitern und Stützisolatoren ausgestattet angeliefert werden und in dem Gehäuse eine stirnseitige Verbindung erfolgt. Innerhalb des Gebäudes werden die einzelnen Teilstücke stirnseitig miteinander verbunden, d. h. die rohrförmigen Kapselungsgehäuse werden gasdicht miteinander verbunden und die im Innern befindlichen elektrischen Leiter werden elektrisch kontaktiert. Die Verbindungen entsprechen dabei der Qualität, wie sie zur Verlegung der gasisolierten elektrischen Leitung innerhalb eines Gewässers nötig sind, d. h. sie sind entsprechend gasdicht und korrosionsfest ausgeführt. Miteinander verbundene Abschnitte der gasisolierten elektrischen Leitung werden über eine Ablaufbahn 3 in das angrenzende Gewässer eingebracht. Dabei werden kontinuierlich an dem innerhalb des Gebäudes 1 befindlichen Ende des bereits fertig gestellten lang gestreckten gasisolierten Leitungsabschnittes weitere Kapselungsgehäuse montiert. Die sich so verlängernde gasisolierte, elektrische Leitung wird fortlaufend in das Gewässer hineinbewegt. Durch dieses Fertigungsverfahren können lang gestreckte gasisolierte Leiterabschnitte von mehreren 100 Metern bis zu mehreren Kilometern Länge entstehen. Die Endseiten der Abschnitte sind für den Transport beispielsweise mittels Blindflanschen, mittels Verschweißungen oder Verklebungen zu verschließen. Um eine effektive Montage zu ermöglichen, kann weiterhin vorgesehen sein, dass die im Gebäude montierten Abschnitte einer elektrischen Hochspannungsprüfung unterzogen werden. Das kann beispielsweise dadurch erfolgen, dass die einzelnen Rohrabschnitte vor ihrem stirnseitigen Anflanschen einer Prüfung unterzogen werden oder zusätzlich oder alternativ der in das Wasser abgelassene lang gestreckte Teilabschnitt der gasisolierten elektrischen Leitungen einer elektrischen Hochspannungsprüfung unterzogen wird.

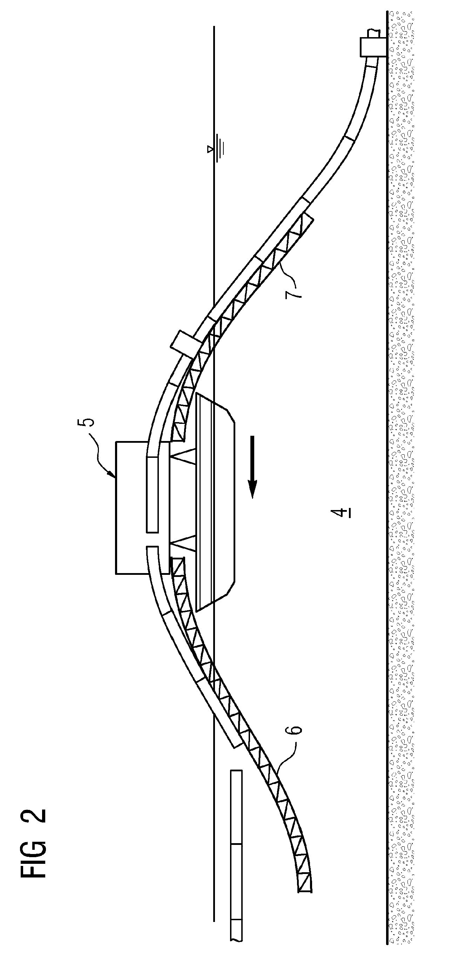

Da die Kapselungsgehäuse in ihrem Inneren mit einem Gas befüllt sind, können die Abschnitte in dem Gewässer schwimmend transportiert werden. Zur Stabilisierung der einzelnen Abschnitte kann vorgesehen sein, beispielsweise mehrere lang gestreckte Abschnitte zu bündeln und diese gebündelten Abschnitte in eine Verlegezone 4 (siehe Figur 2) zu transportieren. Alternativ kann jedoch auch vorgesehen sein, dass in dem Gebäude 1 lediglich eine Montage einzelner Kapselungsgehäuse erfolgt und die Kapselungsgehäuse schwimmend in das Gewässer eingebracht und gebündelt werden und diese kurzen gebündelten Rohrabschnitte in die Verlegezone geschleppt werden. Es kann vorgesehen sein, dass eine Ballastierung der schwimmenden Kapselungsgehäuse erfolgt, um diese unterhalb der Wasseroberfläche zu halten.

In der Verlegezone 4 (Figur 2) ist eine Plattform 5 angeordnet. Die Plattform 5 schwimmt auf der Gewässeroberfläche und weist eine Zuführeinrichtung 6 sowie eine Ablegeeinrichtung 7 auf. Über die Zuführeinrichtung 6 werden die schwimmend angelieferten Transporteinheiten auf die Plattform 5 aufgeführt. Bei lang gestreckt miteinander verbundenen Transporteinheiten kann diese vollständig über die Plattform geführt werden und eine letztmalige Prüfung beispielsweise der Oberfläche oder der Verbindungsstellen erfolgen. Die Endseiten der Transporteinheiten der gasisolierten Leitung werden auf der Plattform miteinander verbunden, so dass sowohl die elektrischen Leiter als auch das Kapselungsgehäuse endgültig miteinander verbunden werden. Weiterhin kann auf der Plattform auch eine Befüllung oder Nachfüllung des Kapselungsgehäuses mit einem elektronegativen Gas, wie beispielsweise Schwefelhexafluorid, Stickstoff oder andern Gasgemischen, vorgenommen werden. Nach einer Verbindung der Abschnitte der gasisolierten Leitungen sowie einer erfolgreichen Abschlußprüfung wird die nunmehr vollständig hergestellte gasisolierte elektrische Leitung in das Gewässer über die Ablegeeinrichtung 7 abgesenkt. Vorteilhafterweise kann dabei vorgesehen sein, dass die Plattform 5 längs des endgültigen Verlegeweges für die gasisolierte elektrische Leitung bewegt wird. Dadurch wird das Transportieren und Zuführen bzw. Ablegen der gasisolierten Leitungsabschnitte bzw. der endgültig montierten gasisolierten elektrischen Leitung vereinfacht.

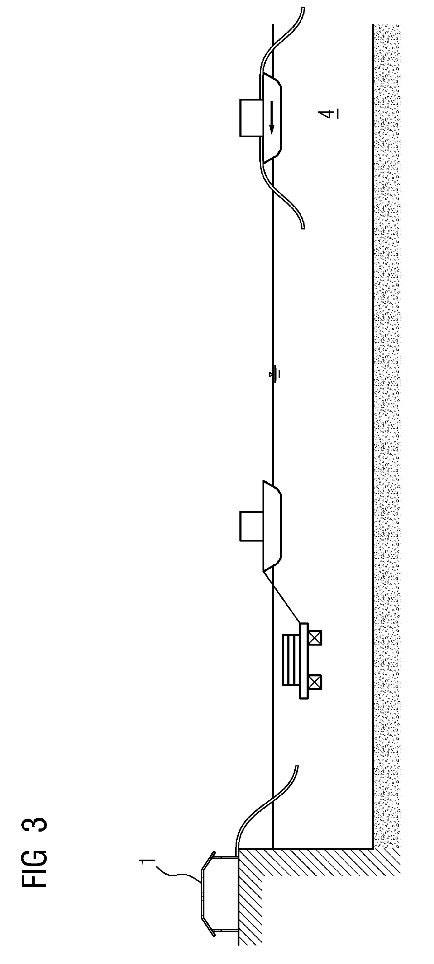

Figur 3 zeigt den Prozess der Herstellung, des Transportes sowie der Verlegung der gasisolierten Leitung in einer Übersicht. Von dem Gebäude 1 werden Abschnitte einer gasisolierten elektrischen Leitung in eine Gewässer abgesenkt. In dem Gewässer werden die als Transporteinheit zusammengestellten Leitungsabschnitte schwimmend in eine Verlegezone 4 transportiert. In dem in der Figur 3 gezeigten Ausführungsbeispiel sind mehrere Rohrabschnitte bündelweise auf einem Transportgestell befestigt. Das Transportgestell ist mit Ballasttanks versehen, die ein Absenken der Rohrbündel unter die Gewässeroberfläche ermöglichen. Alternativ kann auch die in der Figur 1 dargestellte Art der Zusammenstellung einer Transporteinheit vorgesehen sein. Diese lang gestreckten Transporteinheiten können auch zu Bündeln verbunden werden. Die Transporteinheiten werden in die Verlegezone 4 geschleppt, wo eine Plattform fahrbar angeordnet ist, auf die die Abschnitte der gasisolierten elektrischen Leitung aufgebracht werden und von welcher die gasisolierte Leitung endgültig montiert in das Gewässer abgelassen wird.

## Patentansprüche

1. Verfahren zur Verlegung einer gasisolierten elektrischen Leitung in einem Gewässer, wobei die gasisolierte elektrische Leitung zumindest einen innerhalb eines Kapselungsgehäuses elektrisch isoliert gehaltenen elektrischen Leiter aufweist,
**dadurch gekennzeichnet , dass**
- mehrere Teilstücke der gasisolierten elektrischen Leitung zu einer Transporteinheit zusammengestellt werden,
- die Transporteinheit in eine Verlegezone auf dem Gewässer transportiert wird,
- mehrere Transporteinheiten in der Verlegezone miteinander verbunden werden
- und in das Gewässer abgesenkt werden.

2. Verfahren nach Anspruch 1,
**dadurch gekennzeichnet , dass**
die Transporteinheiten vor ihrer Verbringung in die Verlegezone einer Hochspannungsprüfung unterzogen werden.

3. Verfahren nach einem der Ansprüche 1 oder 2,
**dadurch gekennzeichnet , dass**
zur Herstellung einer Transporteinheit mehrere rohrförmige Kapselungsgehäuse miteinander verbunden werden.

4. Verfahren nach Anspruch 3,
**dadurch gekennzeichnet , dass**
die mehreren Kapselungsgehäuse stirnseitig miteinander verbunden sind.

5. Verfahren nach Anspruch 3 oder 4,
**dadurch gekennzeichnet , dass**
die mehreren Kapselungsgehäuse bündelförmig miteinander verbunden sind.

6. Verfahren nach einem der Ansprüche 3, 4 oder 5
**dadurch gekennzeichnet , dass**
die im Innern der mehreren Kapselungsgehäuse befindlichen elektrischen Leiter zur Herstellung einer Transporteinheit miteinander elektrisch kontaktiert werden.

7. Verfahren nach einem der Ansprüche 1 bis 5,
**dadurch gekennzeichnet , dass**
die Kapselungsgehäuse der Transporteinheiten mit einem Gas befüllt und gasdicht verschlossen sind.

8. Verfahren nach einem der Ansprüche 1 bis 7,
**dadurch gekennzeichnet , dass**
die Transporteinheiten schwimmend in die Verlegezone transportiert werden, wobei die Kapselungsgehäuse als Schwimmkörper wirken.

9. Verfahren nach einem der Ansprüche 1 bis 8,
**dadurch gekennzeichnet , dass**
die Verbindung der Transporteinheiten in der Verlegezone auf einer längs eines Verlegeweges verschiebbaren Plattform erfolgt.

10. Verfahren nach Anspruch 9,
**dadurch gekennzeichnet , dass**
die in die Verlegezone verbrachten Transporteinheiten im Gewässer schwimmend auf die Plattform bewegt werden, dort miteinander verbunden werden und die gasisolierte Leitung in das Gewässer abgesenkt wird.
